# NEUE EUROPÄISCHE PATENTSCHRIFT

(11) **EP 1 080 454 B2**
(45) Veröffentlichungstag und Bekanntmachung des Hinweises auf die Entscheidung über den Einspruch: **26.03.2025**
(45) Hinweis auf die Patenterteilung: 03.01.2018
(21) Anmeldenummer: 99924992.3
(22) Anmeldetag: 17.05.1999
(51) Int. Cl.: G06F 21/77, G06F 21/55, G06Q 20/34, G07F 7/08, H04L 9/00

(54) **ZUGRIFFSGESCHÜTZTER DATENTRÄGER**
ACCESS-CONTROLLED DATA STORAGE MEDIUM
SUPPORT DE DONNEES A ACCES PROTEGE

(30) Priorität: 18.05.1998 DE 19822217; 18.05.1998 DE 19822220; 18.05.1998 DE 19822218
(43) Veröffentlichungstag der Anmeldung: 07.03.2001
(73) Patentinhaber: Giesecke+Devrient ePayments GmbH, 81677 München (DE)
(72) Erfinder: VATER, Harald, D-35398 Giessen (DE); DREXLER, Hermann, 80337 München (DE); JOHNSON, Eric, Reston, VA 20191 (US)
(74) Vertreter: Ter Meer Steinmeister & Partner
(86) Internationale Anmeldenummer: PCT/EP1999/003385
(87) Internationale Veröffentlichungsnummer: WO 1999/060534

(56) Entgegenhaltungen:
- EP-A2- 0 448 262
- EP-A2- 0 908 810
- FR-A1- 2 745 924
- US-A- 4 932 053
- SCHNEIER B.: "Applied Cryptography; Protocols, Algorithms, and Source Code in C", 1996, JOHN WILEY & SONS, US, NEW YORK, XP002118740

## Beschreibung

Die Erfindung betrifft einen Datenträger, der einen Halbleiterchip aufweist, in dem geheime Daten abgespeichert sind. Insbesondere betrifft die Erfindung eine Chipkarte.

Datenträger die einen Chip enthalten, werden in einer Vielzahl von unterschiedlichen Anwendungen eingesetzt, beispielsweise zum Durchführen von Finanztransaktionen, zum Bezahlen von Waren oder Dienstleistungen, oder als Identifikationsmittel zur Steuerung von Zugangs- oder Zutrittskontrollen. Bei allen diesen Anwendungen werden innerhalb des Chips des Datenträgers in der Regel geheime Daten verarbeitet, die vor dem Zugriff durch unberechtigte Dritte geschützt werden müssen. Dieser Schutz wird unter anderem dadurch gewährleistet, daß die inneren Strukturen des Chips sehr kleine Abmessungen aufweisen und daher ein Zugriff auf diese Strukturen mit dem Ziel, Daten, die in diesen Strukturen verarbeitet werden, auszuspähen, sehr schwierig ist. Um einen Zugriff weiter zu erschweren, kann der Chip in eine sehr fest haftende Masse eingebettet werden, bei deren gewaltsamer Entfernung das Halbleiterplättchen zerstört wird oder zumindest die darin gespeicherten geheimen Daten vernichtet werden. Ebenso ist es auch möglich, das Halbleiterplättchen bereits bei dessen Herstellung mit einer Schutzschicht zu versehen, die nicht ohne Zerstörung des Halbleiterplättchens entfernt werden kann.

Mit einer entsprechenden technischen Ausrüstung, die zwar extrem teuer aber dennoch prinzipiell verfügbar ist, könnte es einem Angreifer möglicherweise gelingen, die innere Struktur des Chips freizulegen und zu untersuchen. Das Freilegen könnte beispielsweise durch spezielle Ätzverfahren oder durch einen geeigneten Abschleifprozeß erfolgen. Die so freigelegten Strukturen des Chips, wie beispielsweise Leiterbahnen, könnten mit Mikrosonden kontaktiert oder mit anderen Verfahren untersucht werden, um die Signalverläufe in diesen Strukturen zu ermitteln. Anschließend könnte versucht werden, aus den detektierten Signalen geheime Daten des Datenträgers, wie z.B. geheime Schlüssel zu ermitteln, um diese für Manipulationszwecke einzusetzen. Ebenso könnte versucht werden, über die Mikrosonden die Signalverläufe in den freigelegten Strukturen gezielt zu beeinflussen.

Aus der US-Patentschrift US A4,932,053 ist ein Datenträger mit Halbleiterchip bekannt, welcher wenigstens einen Speicher aufweist, in dem ein Betriebsprogramm abgelegt ist, welches mehrere Befehle beinhaltet. Jeder Befehl ruft dabei von außerhalb des Halbleiterchips detektierbare Signale hervor. Die Signale werden durch Stromaufnahme an den Anschlüssen des integrierten Schaltkreises gemessen, wodurch auf die verarbeiteten Daten rückgeschlossen werden kann. Zur Verhinderung des Auslesens wird ein Schutzschaltkreis vorgesehen, welcher eine pseudozufällige Sequenz mittels Simulationszellen erzeugt. Das Stromverhalten, welches von außen meßbar ist, wird somit mit einem zufälligen Signal überlagert.

Aus der französischen Offenlegungsschrift FR-A-2 745 924 ist es bekannt, zur Unkenntlichmachung von Signalen einen Zufallsgenerator zu verwenden, welcher zur Desynchronisierung bei der Ausführung von Befehlssequenzen bzw. Programmsequenzen innerhalb des Prozesses führt.

EP 0 908 810 A2 offenbart ein Gerät zur Verarbeitung von Programminformation, die als Folgen von Blöcken strukturiert ist. Das Gerät umfasst einen sicheren Schaltkreis mit einer CPU, einen externen Speicher und einen Pufferspeicher. Bei der Übertragung einer Folge von Blöcken von Programminformation vom externen Speicher zum Pufferspeicher wird die Reihenfolge der übertragenen Blöcke innerhalb der Folge zufällig variiert.

Der Erfindung liegt die Aufgabe zugrunde, geheime Daten, die in dem Chip eines Datenträgers vorhanden sind, vor unberechtigtem Zugriff zu schützen.

Diese Aufgabe wird durch die Merkmalskombinationen der unabhängigen Ansprüche gelöst.

Bei der erfindungsgemäßen Lösung werden im Gegensatz zum Stand der Technik keine Maßnahmen getroffen, um ein Freilegen der internen Strukturen des Chips und ein Anbringen von Mikrosonden zu verhindern. Es werden statt dessen Maßnahmen getroffen, die es einem potientellen Angreifer erschweren, aus den gegebenenfalls abgehörten Signalverläufen Rückschlüsse auf geheime Informationen zu schließen. Die Signalverläufe hängen von den Operationen ab, die der Chip gerade ausführt. Die Steuerung dieser Operationen erfolgt mit Hilfe eines Betriebsprogramms, das in einem Speicher des Chips gespeichert ist. Das Betriebsprogramm setzt sich aus einer Reihe von einzelnen Befehlen zusammen, die jeweils eine genau festgelegte Operation auslösen. Damit der Chip die ihm zugedachten Funktionen ausüben kann, ist für jede dieser Funktionen eine entsprechende Befehlsfolge zu definieren. Bei einer solchen Funktion kann es sich beispielsweise um das Verschlüsseln von Daten mit Hilfe eines geheimen Schlüssels handeln. Um einem Angreifer, der die Vorgänge auf dem Chip mittels von ihm dort angebrachten Mikrosonden abhört, möglichst wenig Informationen über die jeweils abgearbeiteten Befehle und die bei der Abarbeitung der Befehle verwendeten Daten zu geben, werden - gemäß einer zur vorliegenden Erfindung ersten alternativen Lösung - zur Realisierung einer gewünschten Funktion bevorzugt solche Befehle verwendet bzw. in einer Weise verwendet, daß ein Ausspähen von Informationen nur schwer oder gar nicht möglich ist. Mit anderen Worten, es sollen gemäß der ersten Alternative zur Erfindung keine Befehle oder Befehlsfolgen verwendet werden, bei denen durch Abhören auf einfache Art und Weise auf die verarbeiteten Daten geschlossen werden kann.

Ein Rückschluß auf die Daten ist aber immer dann besonders einfach, wenn der Befehl nur sehr wenige Daten verarbeitet, beispielsweise nur ein einzelnes Bit. Aus diesem Grund werden gemäß einer Ausgestaltung der ersten Alternative zumindest für alle sicherheitsrelevanten Operationen, wie beispielsweise das Verschlüsseln von Daten, bevorzugt solche Befehle verwendet, die gleichzeitig mehrere Bits, z.B. jeweils ein Byte verarbeiten. Durch dieses gleichzeitige Verarbeiten mehrerer Bits verwischt der Einfluß, den die einzelnen Bits auf den durch den Befehl hervorgerufenen Signalverlauf haben zu einem Gesamtsignal, aus dem nur sehr schwer auf die einzelnen Bits rückgeschlossen werden kann. Der Signalverlauf ist wesentlich komplexer als bei der Verarbeitung von einzelnen Bits und es ist nicht ohne weiteres ersichtlich, welcher Teil des Signals zu welchem Bit der verarbeiteten Daten gehört.

Zusätzlich oder alternativ hierzu kann gemäß der ersten Alternative der Angriff auf die verarbeiteten Daten dadurch erschwert werden, daß bei sicherheitsrelevanten Operationen ausschließlich solche Befehle verwendet werden, die einen identischen oder sehr ähnlichen Signalverlauf auslösen bzw. Befehle, bei denen die verarbeiteten Daten keinen oder nur einen sehr geringen Einfluß auf den Signalverlauf haben.

Gemäß einer anderen zweiten Alternative zur Erfindung wird vorgesehen, sicherheitsrelevante Operationen nicht mit echten Geheimdaten durchzuführen, sondern mit verfälschten Geheimdaten, aus denen die echten Geheimdaten nicht ohne Hinzunahme weiterer geheimer Informationen ermittelbar sind. Dies hat zur Folge, daß ein Angreifer selbst dann, wenn es ihm gelungen ist, die bei einer Operation verwendeten Geheimdaten zu ermitteln, damit keinen Schaden anrichten kann, da es sich bei den ausgespähten Daten nicht um die echten Geheimdaten sondern um verfälschte Geheimdaten handelt.

Um die Funktionsweise des Datenträgers zu gewährleisten, muß sichergestellt sein, daß der Datenträger bei rechtmäßiger Verwendung trotz der verfälschten Geheimdaten die richtigen Ergebnisse liefert. Dies wird dadurch erreicht, daß zunächst eine Funktion festgelegt wird, mit der die echten Geheimdaten verfälscht werden, beispielsweise eine EXOR-Verknüpfung der Geheimdaten mit einer Zufallszahl. Die echten Geheimdaten werden mit der so festgelegten Funktion verfälscht. Mit den verfälschten Geheimdaten werden all diejenigen Operationen im Datenträger durchgeführt, bei denen die Verfälschung der Geheimdaten anschließend wieder kompensiert werden kann. Im Falle von EXOR-verfälschten Geheimdaten wären das Operationen, die bezüglich EXOR-Verknüpfungen linear sind. Bevor eine Operation ausgeführt wird, die eine derartige Kompensation nicht zuläßt, beispielsweise eine bezüglich EXOR-Verknüpfung nichtlineare Operation, müssen die echten Geheimdaten wiederhergestellt werden, so daß diese Operation mit den echten Geheimdaten ausgeführt wird. Die Wiederherstellung der echten Geheimdaten nach Durchführung einer kompensierbaren Funktion erfolgt beispielsweise dadurch, daß der mittels der verfälschten Geheimdaten ermittelte Funktionswert mit einem entsprechenden Funktionswert der für die Verfälschung verwendeten Zufallszahl EXOR verknüpft wird. In diesem Zusammenhang ist es wichtig, daß Zufallszahl und Funktionswert vorab in einer sicheren Umgebung ermittelt und gespeichert wurden, damit die Berechnung des Funktionswerts aus der Zufallszahl nicht abgehört werden kann.

Die obige Vorgehensweise hat zur Folge, daß die echten Geheimdaten nur für die Durchführung von den Operationen, wie z.B. nichtlineare Operationen verwendet werden, für die dies unbedingt erforderlich ist, d. h. die nicht ersatzweise mit verfälschten Geheimdaten durchgeführt werden können. Da derartige Operationen in der Regel sehr komplex und nicht einfach analysierbar sind, ist es für einen potentiellen Angreifer extrem schwierig wenn nicht sogar unmöglich, aus einer Analyse der von diesen Operationen hervorgerufenen Signalverläufe die echten Geheimdaten in Erfahrung zu bringen. Da die einfach strukturierten Funktionen, bei denen eine nachträgliche Kompensation der Verfälschung möglich ist, mit verfälschten Geheimdaten durchgeführt werden, wird es durch die beschriebene Vorgehensweise extrem erschwert, aus unberechtigt abgehörten Signalverläufen die echten Geheimdaten des Datenträgers zu ermitteln.

Die Signalverläufe hängen von den Operationen ab, die der Chip gerade ausführt. Wenn diese Operationen immer nach demselben starren Schema ausgeführt werden, d.h. insbesondere immer in derselben Reihenfolge und der Angreifer diese Reihenfolge kennt, muß ein Angreifer weit weniger Schwierigkeiten überwinden, um Daten auszuspähen als wenn er noch nicht einmal weiß, welche Operation zu welchem Zeitpunkt gerade abgearbeitet wird. Es ist daher gemäß der Erfindung vorgesehen, bei der Abarbeitung der sicherheitsrelevanten Operationen innerhalb der Chipkarte sich möglichst weit von einem starren Ablaufschema zu entfernen und dem Angreifer dadurch möglichst keine Ansatzpunkte für eine Analyse der geheimen Daten zu bieten. Dies wird dadurch erreicht, daß möglichst viele, im Idealfall sogar alle Operationen, die insofern voneinander unabhängig sind, daß jede der Operationen keine Daten benötigt, die von den anderen Operationen ermittelt werden, in einer variablen, beispielsweise zufallsbedingten oder von Eingangsdaten abhängigen Reihenfolge abgearbeitet werden. Dadurch wird erreicht, daß ein Angreifer, der sich in der Regel an der Reihenfolge der Operationen orientieren wird, nicht ohne weiteres herausfinden kann, welche Operation gerade abgearbeitet wird. Dies gilt in besonderem Maße dann, wenn sich die Operationen bezüglich des von ihnen bei gleichen Eingangsdaten hervorgerufenen Signalverlaufs sehr stark ähneln oder sogar gleich sind. Wenn dem Angreifer aber nicht einmal die Art der Operation bekannt ist, die gerade abgearbeitet wird, ist es extrem schwierig, gezielt Daten auszuspähen. Wenn die Gefahr besteht, daß ein Angreifer sehr viele Ausspähversuche unternehmen wird, um die zufallsbedingte Variation der Reihenfolge herauszumitteln, empfiehlt es sich, die Variation von den Eingangsdaten abhängig zu machen.

Die Erfindung wird nachstehend anhand der in den Figuren dargestellten Ausführungsformen erläutert. Es zeigen:
- Fig. 1: eine Chipkarte in Aufsicht und
- Fig. 2: einen stark vergrößerten Ausschnitt des Chips der in Fig. 1 dargestellten Chipkarte in Aufsicht,
- Fig. 3: eine schematische Darstellung eines Ausschnitts aus einem Funktionsablauf innerhalb der Chipkarte,
- Fig. 4: eine Variante zu dem in Fig. 3 dargestellten Funktionsablauf,
- Fig. 5: eine schematische Darstellung der Abfolge bei der Abarbeitung einiger Operationen durch die Chipkarte.

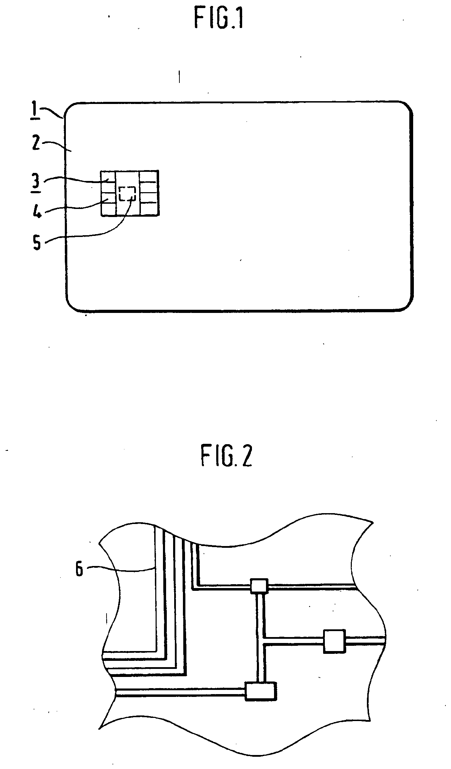

In Fig. 1 ist als ein Beispiel für den Datenträger eine Chipkarte 1 dargestellt. Die Chipkarte 1 setzt sich aus einem Kartenkörper 2 und einem Chipmodul 3 zusammen, das in eine dafür vorgesehene Aussparung des Kartenkörpers 2 eingelassen ist. Wesentliche Bestandteile des Chipmoduls 3 sind Kontaktflächen 4, über die eine elektrische Verbindung zu einem externen Gerät hergestellt werden kann und ein Chip 5, der mit den Kontaktflächen 4 elektrisch verbunden ist. Alternativ oder zusätzlich zu den Kontaktflächen 4 kann auch eine in Fig. 1 nicht dargestellte Spule oder ein anderes Übertragungmittel zur Herstellung einer Kommunikationsverbindung zwischen dem Chip 5 und einem externen Gerät vorhanden sein.

In Fig. 2 ist ein stark vergrößerter Ausschnitt des Chips 5 aus Fig. 1 in Aufsicht dargestellt. Das besondere der Fig. 2 liegt darin, daß die aktive Oberfläche des Chips 5 dargestellt ist, d.h. sämtliche Schichten, die im allgemeinen die aktive Schicht des Chips 5 schützen, sind in Fig. 2 nicht dargestellt. Um Informationen über die Signalverläufe im Inneren des Chips zu erhalten, können beispielsweise die freigelegten Strukturen 6 mit Mikrosonden kontaktiert werden. Bei den Mikrosonden handelt es sich um sehr dünne Nadeln, die mittels einer Präzisions-Positioniereinrichtung mit den freigelegten Strukturen 6, beispielsweise Leiterbahnen in elektrischen Kontakt gebracht werden. Die mit den Mikrosonden aufgenommenen Signalverläufe werden mit geeigneten Meß- und Auswerteeinrichtungen weiterverarbeitet mit dem Ziel, Rückschlüsse auf geheime Daten des Chips schließen zu können.

Mit der Erfindung wird erreicht, daß ein Angreifer auch dann, wenn es ihm gelungen sein sollte, die Schutzschicht des Chips 5 ohne Zerstörung des Schaltkreises zu entfernen und die freigelegten Strukturen 6 des Chips 5 mit Mikrosonden zu kontaktieren oder auf andere Weise abzuhören nur sehr schwer oder gar nicht Zugang zu insbesondere geheimen Daten des Chips erlangt. Selbstverständlich greift die Erfindung auch dann, wenn ein Angreifer auf andere Art und Weise Zugang zu den Signalverläufen des Chips 5 erlangt.

Gemäß der ersten Alternative zur Erfindung werden die Befehle oder Befehlsfolgen des Betriebsprogramms des Chips wenigstens bei allen sicherheitsrelevaten Operationen so ausgewählt, daß aus den abgehörten Signalverläufen entweder überhaupt nicht oder zumindest nur sehr schwer Rückschlüsse auf die mit den Befehlen verarbeiteten Daten gezogen werden können.

Dies kann beispielsweise dadurch erreicht werden, daß man bei Sicherheitsoperationen grundsätzlich auf alle Befehle verzichtet, die einzelne Bits verarbeiten, wie z.B. das Verschieben einzelner Bits, durch das eine Permutation der Bits einer Bitfolge bewirkt werden soll. Statt der Bitbefehle kann man beispielsweise auf Byte-Befehle zurückgreifen, wie beispielsweise Kopier- oder Rotationsbefehle, die statt eines einzelnen Bits gleich ein gesamtes Byte bestehend aus acht Bits verarbeiten. Der Byte-Befehl löst im Gegensatz zu dem Bit-Befehl einen wesentlich komplexeren Signalverlauf aus, wobei eine Zuordnung zwischen einzelnen Bits und Teilbereichen des Signalverlaufs extrem schwierig ist. Dies führt zu einer Verschleierung der mit dem Byte-Befehl verarbeiteten Information und erschwert somit ein Ausspähen dieser Information.

Weiterhin besteht im Rahmen der ersten Alternative zur Erfindung noch die Möglichkeit, bei sicherheitsrelevanten Operationen grundsätzlich nur Befehle zu verwenden, die einen sehr ähnlichen Signalverlauf auslösen, so daß eine Unterscheidung der gerade abgearbeiteten Befehle anhand der Signalverläufe sehr schwierig ist. Ebenso ist es auch möglich, die Befehle so zu gestalten, daß die Art der verarbeiteten Daten keinen oder nur einen sehr geringen Einfluß auf den durch den Befehl ausgelösten Signalverlauf haben.

Die geschilderten Varianten können bezogen auf die einzelnen Befehle entweder alternativ oder in Kombination eingesetzt werden. Ein Satz von sicherheitsrelevanten Befehlen kann sich somit aus Befehlen zusammensetzen, die einer oder mehrerer der oben genannten Varianten angehören. Ebenso kann auch ein Befehlssatz verwendet werden, bei dem alle Befehle derselben Variante angehören, wobei auch zugelassen sein kann, daß einige oder auch alle Befehle darüber hinaus auch anderen Varianten angehören. So können beispielsweise ausschließlich Byte-Befehle zugelassen sein, wobei bevorzugt solche Befehle verwendet werden, die zudem einen sehr ähnlichen Signalverlauf auslösen.

Als sicherheitsrelevante Operationen sind z.B. Verschlüsselungsoperationen anzusehen, die häufig auch bei Chipkarten eingesetzt werden. Im Rahmen solcher Verschlüsselungen werden eine Reihe von Einzeloperationen ausgeführt, die zu bitweisen Veränderungen in einem Datenwort führen. Gemäß der ersten Alternative zur Erfindung werden alle diese Befehle durch Byte-Befehle ersetzt und/ oder es werden die weiteren oben genannten Maßnahmen getroffen. Auf diese Art und Weise wird es einem Angreifer noch weiter erschwert, aus den abgehörten Signalverläufen Rückschlüsse auf die bei der Verschlüsselung verwendeten geheimen Schlüssel zu ziehen und es wird dadurch ein Mißbrauch dieser geheimen Schlüssel verhindert.

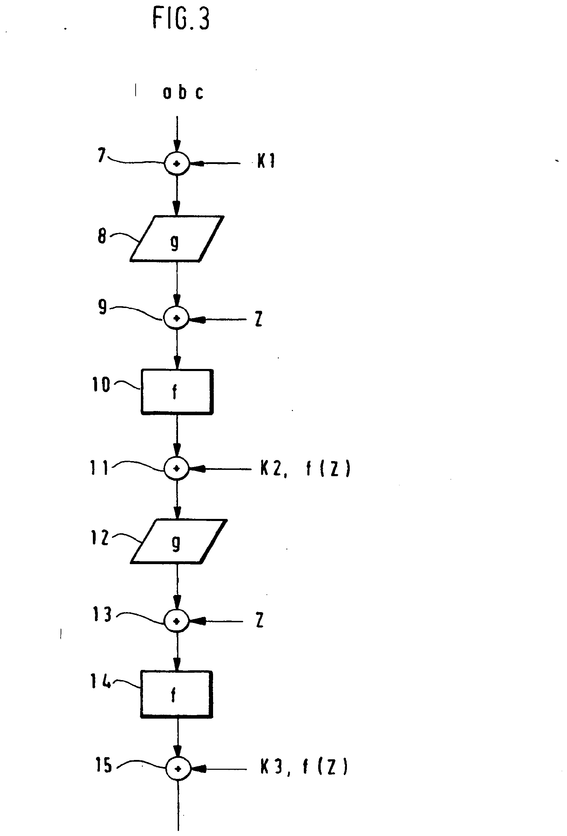

Fig. 3 zeigt eine schematische Darstellung eines Ausschnitts aus einem Funktionsablauf in der Chipkarte. Für die Darstellung wurde beispielhaft eine Verschlüsselungsoperation ausgewählt. Die an diesem Beispiel erläuterten Prinzipien sind aber auch für beliebige andere sicherheitsrelevante Operationen anwendbar. Zu Beginn des in Fig. 3 dargestellten Ausschnitts der Verschlüsselungsoperation werden Daten abc, die.im Klartext oder bereits verschlüsselt vorliegen können, einem Verknüpfungspunkt 7 zugeführt. Im Verknüpfungspunkt 7 findet eine Verknüpfung der Daten abc mit einem Schlüssel K1 statt. Im vorliegenden Beispiel handelt es sich bei dieser Verknüpfung um eine EXOR-Verknüpfung, es können jedoch auch andere geeignete Verknüpfungsformen eingesetzt werden. Auf das Verknüpfungsergebnis wird daraufhin in einem Funktionsblock 8 eine nichtlineare Funktion g angewendet. Um darzustellen, daß der Funktionsblock 8 eine nichtlineare Funktion repräsentiert, ist dieser in Fig. 3 in Form eines verzerrten Rechtecks abgebildet. Die mit dem Funktionsblock 8 erzeugten Daten werden, gemäß der zweiten Alternative zur Erfindung, in einem Verknüpfungspunkt 9 mit einer Zufallszahl Z EXOR verknüpft und anschließend in einem Funktionsblock 10 weiterverarbeitet. Durch die Verknüpfung mit der Zufallszahl Z findet eine Verfälschung der Daten statt, die einem Angreifer eine Analyse der Vorgänge im Funktionsblock 10, der eine lineare Abbildung mittels einer Funktion f repräsentiert, erschwert. Als Symbol für eine lineare Funktion wird in Fig. 3 ein unverzerrtes Rechteck verwendet. Die im Funktionsblock 10 erzeugten Daten werden, gemäß der zweiten Alternative, in einem Verknüpfungspunkt 11 mit Daten f (Z) verknüpft, die vorab z.B. bei der Herstellung der Karte durch Anwendung der Funktion f auf die Zufallszahl Z erzeugt wurden. Durch diese Verknüpfung wird die Verfälschung der Daten mit der Zufallszahl Z im Verknüpfungspunkt 9 kompensiert. Diese Kompensation ist erforderlich, da anschließend die nichtlineare Funktion g im Funktionsblock 12 auf die Daten angewendet werden soll und nach Anwendung einer nichtlinearen Funktion auf die Daten eine Kompensation der Verfälschung nicht mehr möglich ist. Weiterhin werden die Daten im Verknüpfungspunkt 11 mit einem Schlüssel K2 EXOR-verknüpft, der im Rahmen der Verschlüsselungsoperation erforderlich ist.

Die Verknüpfung im Verknüpfungspunkt 11 mit den Daten f (Z) und K2 kann entweder mit den Einzelkomponenten K2 und f (Z) erfolgen oder mit dem Ergebnis einer EXOR-Verknüpfung dieser Einzelkomponenten. Letztere Vorgehensweise eröffnet die Möglichkeit, daß der Schlüssel K2 nicht im Klartext verfügbar sein muß sondern lediglich der mit f (Z) EXORverknüpfte Schlüssel K2. Wenn dieser Verknüpfungswert bereits vorab, z.B. während der Initialisierung oder Personalisierung der Chipkarte 1 berechnet wurde und im Speicher der Karte abgespeichert wurde, ist es nicht erforderlich, den Schlüssel K2 im Klartext in der Chipkarte 1 zu speichern. Auf diese Art und Weise kann die Sicherheit der Chipkarte 1 weiter erhöht werden.

Nach Anwendung der Funktion g auf die Daten im Funktionsblock 12 wird das so ermittelte Ergebnis in einem Verknüpfungspunkt 13 wiederum mit der Zufallszahl Z verknüpft und damit verfälscht. Es folgt im Funktionsblock 14 wiederum eine Anwendung der linearen Funktion f auf das Verknüpfungsergebnis. Schließlich findet an einem Verknüpfungspunkt 15 eine EXOR-Verknüpfung der Daten mit dem Ergebnis einer Anwendung der Funktion f auf die Zufallszahl Z statt und mit einem Schlüssel K3. An diese Verknüpfung können sich weitere Verarbeitungsschritte anschließen, die in Fig. 3 jedoch nicht dargestellt sind.

Insgesamt kann die in Fig. 3 dargestellte, der zweiten Alternative zur Erfindung entsprechende, Vorgehensweise so zusammengefaßt werden, daß die in der Verschlüsselungsoperation verarbeiteten Daten immer dann, wenn dies möglich ist, durch EXOR-Verknüpfung mit einer Zufallszahl Z verfälscht werden, um ein Ausspähen geheimer Daten zu verhindern. Die Verfälschung ist grundsätzlich bei allen Funktionen f möglich, die ein lineares Verhalten gegenüber EXOR-Verknüpfungen zeigen. Bei nichtlinearen Funktionen g müssen die unverfälschten Daten verwendet werden. Es ist daher erforderlich, daß vor Anwendung der nichtlinearen Funktion g auf die Daten die Verfälschung durch eine EXOR-Verknüpfung der Daten mit dem Funktionswert f (Z) kompensiert wird. Dabei ist es unter Sicherheitsaspekten weniger kritisch, daß die nichtlinearen Funktionen g nur auf die unverfälschten Daten angewendet werden können, da diese nichtlinearen Funktionen g ohnehin wesentlich schwerer auszuspähen sind als die linearen Funktionen f. Das in Fig. 3 abgebildete Schema ist sowohl für gleiche Funktionen g bzw. gleiche Funktionen f als auch für jeweils unterschiedliche Funktionen anwendbar.

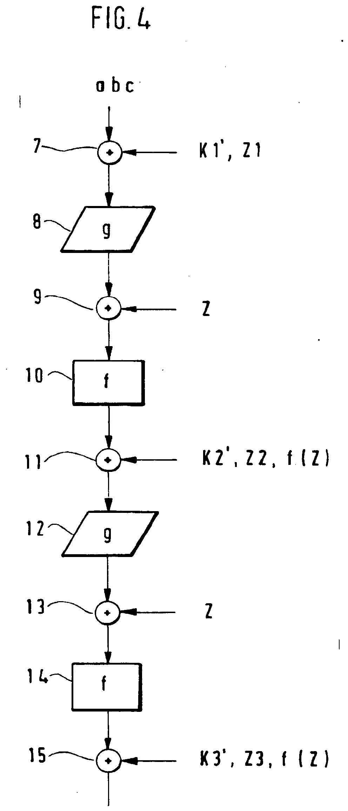

Mit dem in Fig. 3 dargestellten Schema wird erreicht, daß ein Ausspähen geheimer Daten im Zuge der Verarbeitung der Daten abc nahezu unmöglich wird. Da aber zudem bei der Bereitstellung der geheimen Schlüssel K1, K2 und K3 mit diesen Schlüsseln Operationen auszuführen sind, die ihrerseits Ziel eines Ausspähversuchs durch einen Angreifer sein könnten, empfiehlt es sich bei der Verarbeitung der Schlüssel entsprechende Sicherheitsvorkehrungen zu treffen. Eine Ausführungsform der Erfindung, bei der derartige Sicherheitsvorkehrungen vorgesehen sind, ist in Fig. 4 dargestellt.

Fig. 4 zeigt einen der Fig. 3 entsprechenden Ausschnitt eines Funktionsablaufs einer Chipkarte für eine weitere Variante der zweiten Alternative zur Erfindung. Die Verarbeitung der Daten abc erfolgt in identischer Weise wie in Fig. 3 und wird daher im folgenden nicht nochmals erläutert. Im Gegensatz zur Fig 3 werden bei Fig. 4 in die Verknüpfungspunkte 7,11 und 15, jedoch nicht die Schlüssel K1, K2 und K3 eingespeist. Stattdessen werden die verfälschten Schlüssel K1', K2' und K3' zusammen mit den für die Kompensation der Verfälschung benötigten Zufallszahlen Z1, Z2 und Z3 eingespeist, wobei bevorzugt erst die verfälschten Schlüssel und dann die Zufallszahlen eingespeist werden. Auf diese Weise wird sichergestellt, daß die richtigen Schlüssel K1, K2 und K3 überhaupt nicht in Erscheinung treten. Besonders vorteilhaft anwendbar ist diese Vorgehensweise bei Verschlüsselungsverfahren, bei denen die Schlüssel K1, K2 und K3 aus einem gemeinsamen Schlüssel K abgeleitet werden. In diesem Fall wird in der Chipkarte 1 der mit der Zufallszahl Z verfälschte Schlüssel K abgespeichert und es werden die durch Anwendung des Verfahrens zur Schlüsselableitung auf die Zufallszahl Z ermittelten Zufallszahlen Z1, Z2 und Z3 in der Chipkarte 1 abgespeichert. Diese Abspeicherung muß in einer sicheren Umgebung, beispielsweise in der Personalisierungsphase der Chipkarte 1 erfolgen.

Zur Durchführung des in Fig. 4 abgebildeten Funktionsschemas werden neben den abgespeicherten Daten noch die verfälschten abgeleiteten Schlüssel K1', K2' und K3' benötigt. Diese Schlüssel können dann, wenn sie benötigt werden, aus dem verfälschten Schlüssel K abgeleitet werden. Bei dieser Vorgehensweise werden keine Operationen mit dem echten Schlüssel K oder mit den echten abgeleiteten Schlüsseln K1, K2 und K3 durchgeführt, so daß ein Ausspähen dieser Schlüssel praktisch unmöglich ist. Da auch die abgeleiteten Zufallszahlen Z1, Z2 und Z3 bereits im Vorfeld ermittelt und in der Chipkarte 1 gespeichert wurden, werden auch mit diesen keine Operationen mehr ausgeführt, die von einem Angreifer ausgespäht werden könnten. Somit ist auch ein Zugang zu den echten abgeleiteten Schlüsseln K1, K2 und K3 durch Ausspähen der verfälschten abgeleiteten Schlüssel K1', K2' und K3' nicht möglich, da hierzu die abgeleiteten Zufallszahlen Z1, Z2 und Z3 benötigt werden.

Um die Sicherheit weiter zu erhöhen ist es auch möglich, für jede EXOR-Verknüpfung eine andere Zufallszahl Z zu verwenden, wobei dabei zu beachten ist, daß dann jeweils auch ein f (Z) zur Kompensation der Verfälschung vorhanden ist. In einer Ausführungsform werden sämtliche Zufallszahlen Z und Funktionswerte f (Z) im Speicher der Chipkarte gespeichert. Ebenso ist es aber auch möglich, jeweils nur eine geringe Anzahl von Zufallszahlen R und Funktionswerten f (Z) zu speichern und immer dann, wenn diese Werte benötigt werden, neue Zufallszahlen Z und Funktionswerte f (Z) durch EXOR-Verknüpfung oder eine andere geeignete Verknüpfung mehrerer gespeicherter Zufallszahlen Z und Funktionswerte F (Z) zu ermitteln. Dabei können die Zufallszahlen Z für die EXOR-Verknüpfung nach dem Zufallsprinzip aus der Menge der gespeicherten Zufallszahlen Z ausgewählt werden.

In einer weiteren Ausführungsform der zweiten Alternative entfällt die Speicherung der Zufallszahlen Z und Funktionswerte f (Z), da diese jeweils bei Bedarf mittels geeigneter Generatoren erzeugt werden. Dabei ist es wichtig, daß der oder die Generatoren die Funktionswerte f (Z) nicht durch Anwendung der linearen Funktion f auf die Zufallszahl Z erzeugen sondern auf andere Art und Weise Paare von Zufallszahlen Z und Funktionswerten f (Z) erzeugt, da sonst durch Abhören der Anwendung der Funktion f auf die Zufallszahl Z möglicherweise diese Zufallszahl Z ausgespäht werden könnte und mit Hilfe dieser Information weitere geheime Daten ermittelt werden könnten.

Gemäß der zweiten Alternative zur Erfindung können grundsätzlich alle sicherheitsrelevanten Daten, beispielsweise auch Schlüssel, mit Hilfe weiterer Daten, wie beispielsweise Zufallszahlen, verfälscht werden und dann einer Weiterverarbeitung zugeführt werden. Dadurch wird erreicht, daß ein Angreifer, der diese Weiterverarbeitung ausspäht, nur wertlose, da verfälschte Daten ermitteln kann. Am Ende der Weiterverarbeitung wird die Verfälschung wieder rückgängig gemacht.

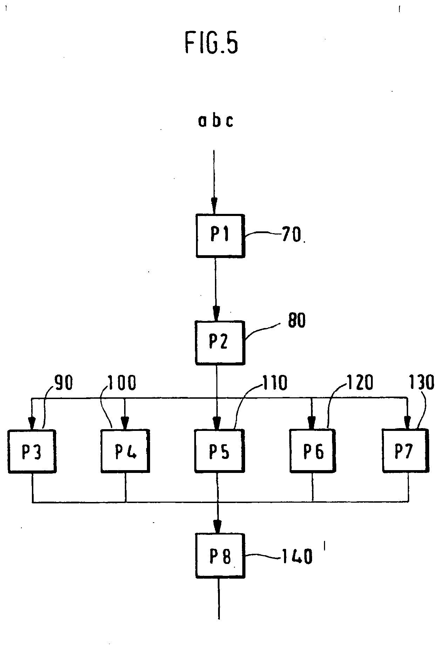

Fig. 5 zeigt, zur Veranschaulichung der Erfindung, eine schematische Darstellung der Abfolge bei der Abarbeitung einiger Operationen durch die Chipkarte. In Fig. 5 ist insbesondere dargestellt, welche Operationen von der Chipkarte 1 zwingend sequentiell abgearbeitet werden müssen, da sie voneinander abhängen und welche Operationen im Prinzip parallel und damit auch in einer beliebigen Reihenfolge abgearbeitet werden können. Hierzu ist in Fig. 5 ein Ausschnitt aus einem Programmdurchlauf der Chipkarte 1 dargestellt, in dem Daten abc verarbeitet werden. Alle zwingend sequentiell abzuarbeitenden Operationen sind in Fig. 5 sequentiell aufeinanderfolgend dargestellt. Alle Operationen bei denen es nicht auf die Reihenfolge der Abarbeitung untereinander ankommt, sind parallel zueinander angeordnet.

Die Bearbeitung der Daten abc beginnt mit einer Operation P1, die in Form eines Blockes 70 dargestellt ist. An dem Block schließt sich sequentiell ein Block 80 an, der die Operation P2 repräsentiert. Aus Fig. 5 ergibt sich somit, daß die Bearbeitungsreihenfolge der Operationen P1 und P2 nicht vertauscht werden kann, d.h. zwingend fest ist. Nach Block 80 verzweigt sich das in Fig. 5 dargestellte Schema zu fünf Blöcken 90,100,110,120,130, die die Operationen P3, P4, P5, P6 und P7 repräsentieren. Daraus ergibt sich, daß die Blöcke P3, P4, P5, P6 und P7 gleichzeitig abgearbeitet werden können und somit auch in einer beliebigen Reihenfolge abgearbeitet werden können. Erfindungsgemäß wird die Reihenfolge der Abarbeitung dieser Operationen P3, P4, P5, P6, P7 bei jedem Durchlauf variiert, d.h. es ist für einen Arigreifer nicht absehbar, welche dieser Operationen sich an die Operation P2 anschließt, welche Operationen wiederum danach durchgeführt wird usw. Die Variation der Reihenfolge kann entweder nach einem fest vorgegebenen Schema oder besser noch zufallsbedingt oder abhängig von Eingangsdaten erfolgen, indem mittels einer Zufallszahl bzw. durch die Eingangsdaten jeweils festgelegt wird, welche der Operationen P3, P4, P5, P6 und P7 als nächste abgearbeitet wird. Durch diese gegebenenfalls zufallsbedingte Variation der Abarbeitung der einzelnen Operationen wird ein Ausspähen der mit den Operationen verarbeiteten Daten erschwert. Wenn alle Operationen P3, P4, P5, P6 und P7 abgearbeitet sind, schließt sich zwingend die Operation P8 an, deren Bearbeitungsreihenfolge nicht variabel ist. Die Operation P8 ist durch den Block 140 dargestellt. Auf die Operation P8 können weitere, und zwar sowohl in der Reihenfolge variable als auch in der Reihenfolge feste Operationen folgen, die allerdings in der Fig. 5 nicht mehr dargestellt sind.

Die Erfindung kann beispielsweise im Rahmen der Abarbeitung von Verschlüsselungsalgorithmen eingesetzt werden, die häufig ähnliche Operationen enthalten, deren Bearbeitungsreihenfolge variierbar ist. In einer Alternative zur Erfindung kann die Bearbeitungsreihenfolge dabei entweder jeweils vor der ersten variierbaren Operation gemeinsam für alle mit dieser ersten Operation vertauschbaren Operationen festgelegt werden Erfindungsgemäß wird vor jeder variierbaren Operation aus der Menge der noch verbleibenden variierbaren Operationen die nächste zu bearbeitende Operation bestimmt. In beiden Fällen können zur Festlegung der Bearbeitungsreihenfolge Zufallszahlen herangezogen werden.

## Patentansprüche

1. Datenträger mit einem Halbleiterchip, der wenigstens einen Speicher aufweist, in dem ein Betriebsprogramm abgelegt ist, **dadurch gekennzeichnet, daß** mit dem Betriebsprogramm eine Vielzahl von Operationen ausgeführt werden können, wobei für wenigstens eine Untermenge dieser Operationen gilt, daß das bei Ausführung mehrerer Operationen der Untermenge erzielte Gesamtergebnis nicht von der Reihenfolge der Ausführung der Operationen abhängt, und die Reihenfolge der Ausführung der genannten Untermenge von Operationen wenigstens dann variiert wird, wenn die Untermenge eine oder mehrere sicherheitsrelevante Operationen enthält, wobei die Reihenfolge der Ausführung zufallsbedingt variiert wird und wobei jeweils vor Beginn der Ausführung einer Operation der Untermenge festgelegt wird, welche der Operationen der Untermenge, deren Ausführung aufeinanderfolgend vorgesehen ist, als nächste ausgeführt wird.

2. Datenträger nach Anspruch 1, **dadurch gekennzeichnet, daß** die Reihenfolge der Ausführung bei jedem Durchlauf durch die genannte Untermenge der Operationen variiert wird.

3. Datenträger nach einem der Ansprüche 1 oder 2, **dadurch gekennzeichnet, daß** die Reihenfolge der Ausführung abhängig von den mit den Operationen verarbeiteten Daten variiert wird.

4. Datenträger nach einem der Ansprüche 1 bis 3, **dadurch gekennzeichnet, daß** die Reihenfolge der Ausführung jeweils vor der Ausführung der ersten Operation der Untermenge für alle Operationen der Untermenge festgelegt wird, deren Ausführung unmittelbar aufeinanderfolgend vorgesehen ist.

5. Datenträger nach einem der vorhergehenden Ansprüche, **dadurch gekennzeichnet, daß** es sich bei dem Datenträger um eine Chipkarte handelt.

6. Verfahren, in einem Datenträger mit einem Halbleiterchip, der wenigstens einen Speicher aufweist, in dem ein Betriebsprogramm abgelegt ist, zur Ausführung einer Vielzahl von Operationen innerhalb des Betriebsprogramms des Datenträgers, wobei für wenigstens eine Untermenge dieser Operationen gilt, daß das bei Ausführung mehrerer Operationen der Untermenge erzielte Gesamtergebnis nicht von der Reihenfolge der Ausführung der Operationen abhängt, und die Reihenfolge der Ausführung der genannten Untermenge von Operationen wenigstens dann variiert wird, wenn die Untermenge eine oder mehrere sicherheitsrelevante Operationen enthält, wobei die Reihenfolge der Ausführung zufallsbedingt variiert wird und wobei jeweils vor Beginn der Ausführung einer Operation der Untermenge festgelegt wird, welche der Operationen der Untermenge, deren Ausführung aufeinanderfolgend vorgesehen ist, als nächste ausgeführt wird.

7. Verfahren nach Anspruch 6, **dadurch gekennzeichnet, daß** die Reihenfolge der Ausführung bei jedem Durchlauf durch die genannte Untermenge der Operationen variiert wird.

8. Verfahren nach einem der Ansprüche 6 oder 7, **dadurch gekennzeichnet, daß** die Reihenfolge der Ausführung abhängig von den mit den Operationen verarbeiteten Daten variiert wird.

9. Verfahren nach einem der Ansprüche 6 bis 8, **dadurch gekennzeichnet, daß** die Reihenfolge der Ausführung jeweils vor der Ausführung der ersten Operation der Untermenge für alle Operationen der Untermenge festgelegt wird.

## Claims

1. A data carrier having a semiconductor chip, which has at least one memory in which an operating program is stored, **characterized in that** with the operating program a plurality of operations can be executed, wherein for at least a subset of these operations there holds that upon execution of several operations of the subset the achieved total result does not depend on the order of execution of the operations, and the order of execution of the stated subset of operations is varied at least when the subset contains one or more security-relevant operations, wherein the order of execution is varied randomly, and wherein the order of execution is fixed respectively before the start of the execution of an operation of the subset for all operations of the subset, whose execution is provided as directly successive.

2. The data carrier according to claim 1, **characterized in that** the order of execution is varied upon each run through the stated subset of the operations.

3. The data carrier according to any of claims 1 or 2, **characterized in that** the order of execution is varied in dependence on the data processed with the operations.

4. The data carrier according to any of claims 1 to 3, **characterized in that** the order of execution is fixed respectively before the execution of the first operation of the subset for all operations of the subset, whose execution is provided as directly successive.

5. The data carrier according to any of the previous claims, **characterized in that** the data carrier is a chip card.

6. A method, in a data carrier having a semiconductor chip, which has at least one memory, in which an operating program is stored, for executing a plurality of operations within the operating program of the data carrier, wherein for at least a subset of these operations there holds that upon execution of several operations of the subset the achieved total result does not depend on the order of execution of the operations, and the order of execution of the stated subset of operations is varied at least when the subset contains one or more security-relevant operations, wherein the order of execution is varied randomly, and wherein the order of execution is fixed respectively before the start of the execution of an operation of the subset for all operations of the subset, whose execution is provided as directly successive.

7. The method according to claim 6, **characterized in in that** the order of execution is varied upon each run through the stated subset of the operations.

8. The method according to any of claims 6 or 7, **characterized in that** the order of execution is varied in dependence on the data processed with the operations.

9. The method according to any of claims 6 to 8, **characterized in that** the execution is fixed respectively before the execution of the first operation of the subset for all operations of the subset.

## Revendications

1. Support de données ayant une puce à semi-conducteur qui comporte au moins une mémoire dans laquelle un programme d'exploitation est stocké, **caractérisé en ce que**, avec le programme d'exploitation, une pluralité d'opérations peuvent être exécutées, cependant que, pour au moins un sous-ensemble de ces opérations, il est établi que le résultat global obtenu lors d'une exécution de plusieurs opérations du sous-ensemble ne dépend pas de l'ordre de l'exécution des opérations, et que l'ordre de l'exécution dudit sous-ensemble d'opérations est amené à varier au moins quand le sous-ensemble contient une ou plusieurs opérations touchant à la sécurité, dans lequel l'ordre de l'exécution est amené à varier aléatoirement, et dans lequel, respectivement avant le commencement de l'exécution d'une opération du sous-ensemble, il est fixé laquelle des opérations du sous-ensemble dont l'exécution est prévue de manière successive est la prochaine à être exécutée.

2. Support de données selon la revendication 1, **caractérisé en ce que** l'ordre de l'exécution est amené à varier à chaque cycle par ledit sous-ensemble des opérations.

3. Support de données selon une des revendications 1 ou 2, **caractérisé en ce que** l'ordre de l'exécution est amené à varier en fonction des données traitées avec les opérations.

4. Support de données selon une des revendications de 1 à 3, **caractérisé en ce que** l'ordre de l'exécution est respectivement fixé avant l'exécution de la première opération du sous-ensemble pour toutes les opérations du sous-ensemble dont l'exécution est prévue de manière directement successive, dans lequel l'ordre de l'exécution est amené à varier aléatoirement, et dans lequel, respectivement avant le commencement de l'exécution d'une opération du sous-ensemble, il est fixé laquelle des opérations du sous-ensemble dont l'exécution est prévue de manière successive est la prochaine à être exécutée.

5. Support de données selon une des revendications précédentes, **caractérisé en ce que** le support de données consiste en une carte à puce.

6. Procédé, dans un support de données ayant une puce à semi-conducteur qui comporte au moins une mémoire dans laquelle un programme d'exploitation est stocké, pour l'exécution d'une pluralité d'opérations au sein du programme d'exploitation du support de données, cependant que, pour au moins un sous-ensemble de ces opérations, il est établi que le résultat global obtenu lors d'une exécution de plusieurs opérations du sous-ensemble ne dépend pas de l'ordre de l'exécution des opérations, et que l'ordre de l'exécution dudit sous-ensemble d'opérations est amené à varier au moins quand le sous-ensemble contient une ou plusieurs opérations touchant à la sécurité.

7. Procédé selon la revendication 6, **caractérisé en ce que** l'ordre de l'exécution des opérations est amené à varier à chaque cycle par ledit sous-ensemble des opérations.

8. Procédé selon une des revendications 6 ou 7, **caractérisé en ce que** l'ordre de l'exécution est amené à varier en fonction des données traitées avec les opérations.

9. Procédé selon une des revendications de 6 à 8, **caractérisé en ce que** l'ordre de l'exécution est respectivement fixé avant l'exécution de la première opération du sous-ensemble pour toutes les opérations du sous-ensemble.
